# EUROPEAN PATENT APPLICATION

(11) **EP 3 343 794 A1**
(43) Date of publication of application: **04.07.2018**
(21) Application number: 16839154.8
(22) Date of filing: 17.08.2016
(51) Int. Cl.: H04B 7/04, H04B 7/02, H04B 7/08, H04W 8/22, H04W 16/28, H04W 52/02

(54) **USER EQUIPMENT, BASE STATION, SIGNAL RECEIVING METHOD AND DIRECTION METHOD**

(30) Priority: 27.08.2015 JP 2015168341
(71) Applicant: NTT DOCOMO, INC., Chiyoda-ku Tokyo 100-6150 (JP)
(72) Inventor: SANO, Yousuke, Tokyo 100-6150 (JP); TAKAHASHI, Hideaki, Tokyo 100-6150 (JP); UMEDA, Hiromasa, Tokyo 100-6150 (JP); TESHIMA, Kunihiko, Tokyo 100-6150 (JP); NAGATA, Satoshi, Tokyo 100-6150 (JP)
(74) Representative: Hoffmann Eitle
(86) International application number: PCT/JP2016/073972
(87) International publication number: WO 2017/033807

(57) **Abstract**

A user apparatus is disclosed in a radio communication system including a base station and the user apparatus. The user apparatus includes a reporting unit configured to report, to the base station, antenna count information indicating the number of reception antennas supported by the user apparatus, a first receiving unit configured to receive, from the base station, indication information indicating the number of reception antennas to be activated in the user apparatus, and a second receiving unit configured to receive, in a case where the first receiving unit has received the indication information, downlink signals from the base station by using the number of reception antennas indicated by the indication information.

## Description

### TECHNICAL FIELD

The present invention relates to a user apparatus, a base station, a signal reception method, and an indication method.

### BACKGROUND ART

In LTE (Long Term Evolution) and LTE-A (LTE-Advanced), a technique called MIMO (Multi Input Multi Output) that performs transmission and reception using multiple antennas between the base station and the user apparatus has been applied to improve the frequency usage efficiency (system capacity) and improve the peak throughput, etc. In LTE, up to 4 × 4 MIMO have been defined, whereas in LTE-A, up to 8 × 8 MIMO have been defined. The 4 × 4 MIMO is configured to perform transmission or reception using a maximum number of four antennas in both the base station and the user apparatus in downlink. The 8 × 8 MIMO is configured to perform transmission or reception using a maximum number of eight antennas in both the base station and the user apparatus in downlink.

### RELATED ART DOCUMENT

### [NON-PATENT DOCUMENT]

[NON-PATENT DOCUMENT 1] 3GPP TS 36.300 V12.6.0 (2015-06)

### SUMMARY OF THE INVENTION

### PROBLEM TO BE SOLVED BY THE INVENTION

For example, a user apparatus having the capability of 4 × 4 MIMO has four reception antennas within the user apparatus itself. However, when all the four reception antennas are activated to receive downlink signals from the base station, the battery consumption increases compared to the case where less than four (e.g., two) antennas are activated to receive downlink signals.

When the number of active antennas is reduced from four to two in order to reduce the battery consumption, the 4 × 4 MIMO may fail to be achieved. That is, the maximum number of layers is decreased down to two layers, which may degrade the peak throughput. Further, in a case where the number of active antennas is assumed to be reduced from four to two while communications are performed with 2 × 2 MIMO, the reception diversity gain at the user apparatus UE may be reduced. That is, there is a trade-off relationship between the battery consumption of the user apparatus, the peak throughput and reception quality.

In the base station, it is assumed to transmit data at high rates while securing peak throughput by using the number of the higher-order MIMO layers in a case where a large amount of data needs to be transmitted to the user apparatus. In the user apparatus, on the other hand, it is assumed for the user apparatus to voluntarily reduce the number of simultaneously operating antennas of the user apparatus itself in a case where the battery consumption of the user apparatus itself needs to be reduced. That is, the peak throughput desired by the base station may fail to be secured due to the reduced number of simultaneously operating antennas in the user apparatus. Note that the above-described problem of the battery consumption may also occur for the number of transmission antennas.

The above-described problem may be solved in a case where the appropriate number of antennas to be activated within the user apparatus is indicated from the base station to the user apparatus. However, the current LTE includes no definition with respect to a technique to indicate the number of antennas to be activated within the user apparatus from the base station to the user apparatus. The disclosed technique is contrived in view of the above-mentioned points, and an object of the disclosure is to provide a technique capable of indicating the appropriate number of antennas to be activated within the user apparatus.

### MEANS FOR SOLVING THE PROBLEM

According to an embodiment of the present invention, there is provided a user apparatus in a radio communication system including a base station and the user apparatus. The user apparatus includes
a reporting unit configured to report, to the base station, antenna count information indicating the number of reception antennas supported by the user apparatus;
a first receiving unit configured to receive, from the base station, indication information indicating the number of reception antennas to be activated in the user apparatus; and
a second receiving unit configured to receive, in a case where the first receiving unit has received the indication information, downlink signals from the base station by using the number of reception antennas indicated by the indication information.

According to an embodiment of the present invention, there is provided a base station in a radio communication system including the base station and a user apparatus. The base station includes
a receiving unit configured to receive antenna count information indicating the number of reception antennas supported by the user apparatus; and
a transmission unit configured to transmit indication information indicating, to the user apparatus, the number of reception antennas to be activated in the user apparatus based on the number of reception antennas included in the antenna count information.

### ADVANTAGEOUS EFFECTS OF INVENTION

According to an embodiment of the present invention, there is provided a technique capable of indicating the number of antennas to be activated within a user apparatus.

### BRIEF DESCRIPTION OF THE DRAWINGS

FIG. 1 is a diagram illustrating a configuration example of a radio communication system according to an embodiment;
FIG. 2A is a sequence diagram illustrating an example of a process flow performed by a radio communication system according to an embodiment;
FIG. 2B is a sequence diagram illustrating an example of a process flow performed by a radio communication system according to an embodiment;
FIG. 3 is a diagram illustrating an example of an IE for reporting the number of reception antennas supported by a user apparatus;
FIG. 4 is a diagram illustrating an example of an IE for reporting the number of reception antennas to be activated in the user apparatus;
FIG. 5 is a diagram illustrating an example of a functional configuration of a user apparatus according to an embodiment;
FIG. 6 is a diagram illustrating an example of a functional configuration of a base station according to an embodiment; and
FIG. 7 is a diagram illustrating an example of a hardware configuration of the base station and the user apparatus according to an embodiment.

### EMBODIMENTS FOR CARRYING OUT THE INVENTION

The following describes embodiments of the present invention with reference to the accompanying drawings. Note that the embodiments described below are merely examples and the embodiments to which the present invention is applied are not limited to the following embodiments. For example, it is assumed that a radio communication system according to an embodiment complies with LTE standards. However, the present invention may be applied not limited to LTE but may also be applied to other systems. Note that, in the specification and the claims, the term "LTE" is used not only to mean a communication scheme corresponding to 3GPP release 8 or 9, but also to mean the fifth-generation mobile communication system corresponding to 3GPP release 10, 11, 12, 13, 14 or later.

### OUTLINE

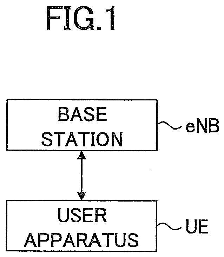

FIG. 1 is a diagram illustrating a configuration example of a radio communication system according to an embodiment. As illustrated in FIG. 1, the radio communication system according to the embodiment has a base station eNB and a user apparatus UE. FIG. 1 illustrates the radio communication system according to the embodiment that includes one user apparatus UE for convenience of illustration; however, the radio communication system according to the embodiment may include two or more user apparatuses UEs.

The base station eNB communicates with the user apparatus UE via radio. The base station eNB is composed of hardware resources including a CPU such as a processor, a memory device such as a ROM, a RAM, or a flash memory, an antenna for communicating with the user apparatus UE or the like, and a communication interface device for communicating with a neighboring base station or the like. Respective functions and processes of the base station eNB may be implemented by causing a processor to process or execute the programs and data stored in the memory device. However, the base station eNB is not limited to the above-described hardware configuration; the base station eNB may have any other appropriate hardware configuration.

The user apparatus UE has a function to communicate with the base station eNB and other user apparatuses UE and the like via radio. The user apparatus UE may be any user apparatus insofar as the apparatus has a communication function. The user apparatus UE is composed of hardware resources including a CPU such as a processor, a memory device such as a ROM, a RAM or a flash memory, an antenna for communicating with the base station eNB, an RF (radio frequency) device, and the like. Respective functions and processes of the user apparatus UE may be implemented by causing a processor to process or execute the programs and data stored in the memory device. However, the user apparatus UE is not limited to the above-described hardware configuration; the user apparatus UE may have any other appropriate hardware configuration.

### PROCESS FLOW

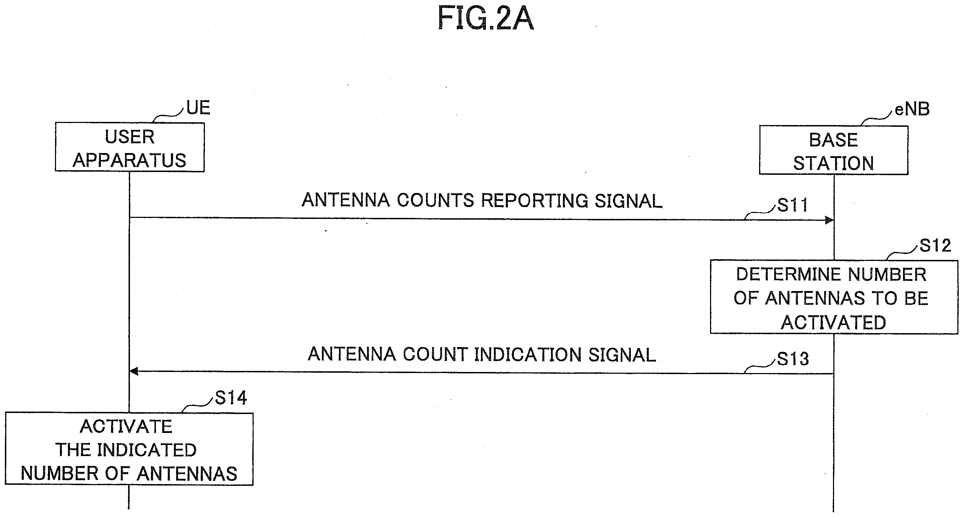

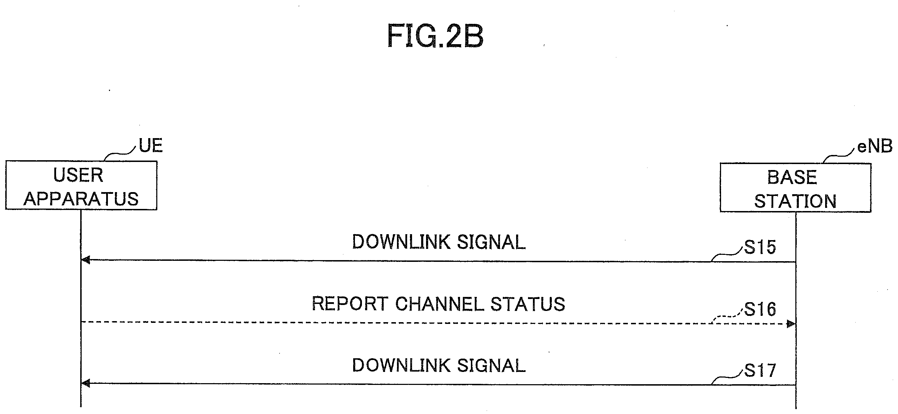

FIGs. 2A and 2B are sequence diagrams each illustrating examples of a process flow performed by a radio communication system according to an embodiment. Note that FIG. 2A illustrates a process of indicating and canceling the number of reception antennas to be activated simultaneously from the base station eNB to the user apparatus UE. Initially, FIG. 2A is illustrated.

In step S11, the user apparatus UE transmits an antenna count reporting signal to the base station eNB to report, to the base station eNB, the number of reception antennas supported by the user apparatus UE itself. The antenna count reporting signal stores information indicating the number of reception antennas supported by the user apparatus UE itself (hereinafter referred to as "antenna count information"). Note that the number of reception antennas supported by the user apparatus UE itself indicates the number of reception antennas capable of being activated simultaneously within the user apparatus UE.

The antenna count information may include a maximum value for setting the number of reception antennas capable of being activated simultaneously. For example, in the case of a user apparatus UE having eight reception antennas and capable of activating any number of antennas among the eight antennas, the value indicating "8 antennas" may be set in the antenna count information, and the antenna count information is then reported to the base station eNB. In this case, the base station eNB recognizes that any number of antennas among the eight antennas may be simultaneously activated in the user apparatus UE.

The antenna count information may include a value for individually setting the number of reception antennas capable of being activated simultaneously. For example, the above-described user apparatus UE may individually set values of "1" to "8" as the antenna count information and report, to the base station eNB, such antenna count information.

Further, in a case where the user apparatus UE has eight reception antennas and is capable of simultaneously activating one, four or eight reception antennas out of the eight reception antennas; that is, in a case where the user apparatus UE has eight reception antennas and is capable of simultaneously activating one, four or eight reception antennas out of the eight reception antennas but is incapable of simultaneously activating two, three , or five to seven reception antennas, the user apparatus UE may individually set a value indicating one, four or eight reception antennas in the antenna count information and send the antenna count information to the base station eNB. In this case, the base station eNB recognizes that the number of reception antennas capable of being simultaneously activated in the user apparatus UE is any of one, four, and eight antennas. As a result, it may be possible to simplify the process of controlling the number of reception antennas to be activated simultaneously in the user apparatus UE.

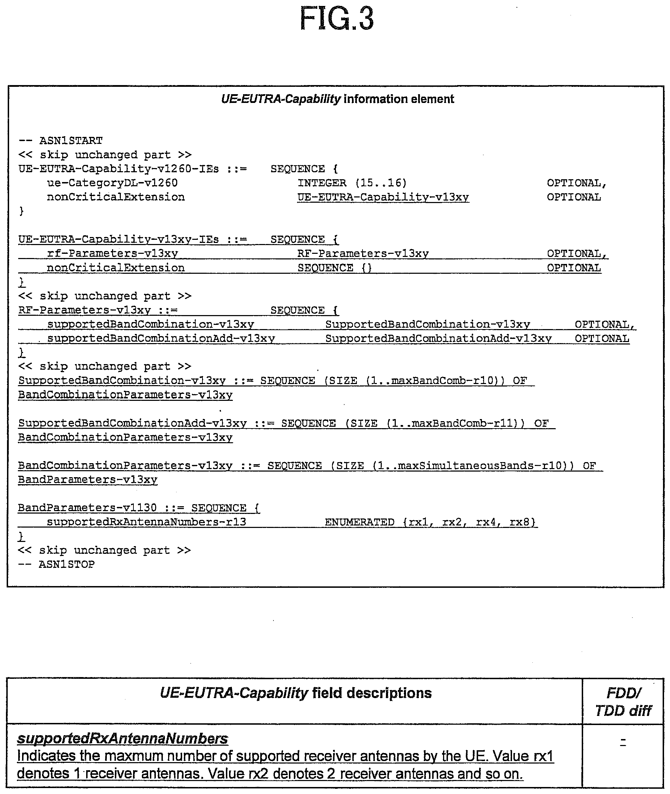

Note that the antenna count reporting signal may be, for example, an RRC message or an RRCUE Capability Information message, for example. The antenna count information may be called "supportedRxAntennaNumber". The antenna count information may be included in the UE-EUTRA-CapabilityInformationElement. FIG. 3 depicts an example of the UE-EUTRA-CapabilityInformationElement that includes the antenna count information. In the example of FIG. 3, "rx1, rx2, rx4, and rx8" are illustrated as examples of the setting value, but the number of reception antennas that may be set is not limited to these examples. For example, rx3, rx5, rx6, and rx7 may be set as the setting values, or nine or more may be set as the number of the reception antennas.

In step S12, the base station eNB determines the number of reception antennas to be activated in the user apparatus UE based on the number of reception antennas set in the antenna count information received from the user apparatus UE. For example, when a large amount of downlink data to be transmitted to the user apparatus UE is accumulated in the base station eNB (e.g., when the amount of remaining data exceeds a predetermined threshold), the maximum number of reception antennas reported by the user apparatus UE may be determined as the number of reception antennas to be activated by the user apparatus UE, in order to secure peak throughput using higher-order MIMO.

Further, for example, when the base station eNB determines that the peak throughput has decreased due to a large number of user transmission terminal apparatuses UEs residing in a coverage area, the base station eNB may determine the number of antennas less than the maximum number of reception antennas reported by the user apparatus UE as the number of reception antennas to be activated by the user apparatus UE, in order to reduce the battery consumption of the user apparatus UE.

Further, when the number of transmission antennas included in the base station eNB itself is small (e.g., one), the base station eNM may instruct the user apparatus UE to set the number of reception antennas to be activated by the user apparatus UE to be equal to or less than the number of transmission antennas included in the base station eNB itself. The battery consumption of the user apparatus UE may be forcefully reduced in this manner.

In step S13, the base station eNB transmits an antenna count indicating signal to the user apparatus UE in order to indicate the number of reception antennas determined in step S12 to the user apparatus UE. The antenna count indicating signal includes information (hereinafter referred to as "indication information") indicating the number of reception antennas to be activated simultaneously in the user apparatus UE.

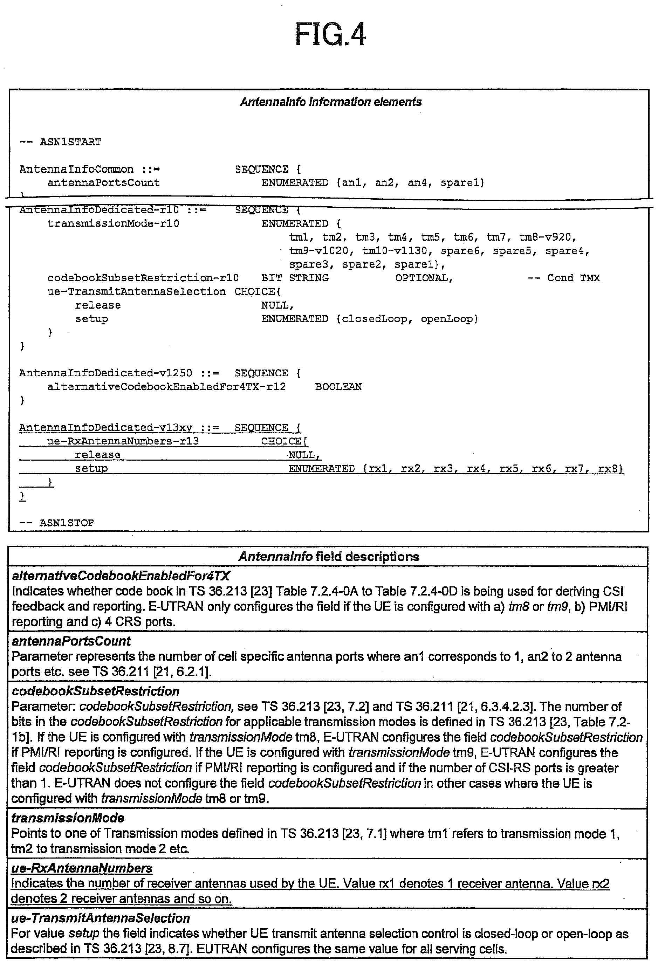

Note that the antenna count reporting signal may, for example, be an RRC message or an "RRCConnectionReconfiguration" message. Further, the indication information may be called "ue-RxAntennaNumbers". The indication information may be included in the "AntennaInfoInformationElements". FIG. 4 depicts an example of "AntennaInfoInformationElements" including indication information. The example of FIG. 4 illustrates that any one of "rx1, rx2, rx3, rx4, rx5, rx6, rx7, and rx8" is set as an example of the setting value; however, the setting value is not limited to these examples. For example, nine or more reception antennas may be set for the setting value.

The antenna count indicating signal may be a layer 1 or layer 2 signal. More specifically, the antenna count indication signal is PDCCH (Physical Downlink Control Channel), and the indication information may be included in DCI (Downlink Control Information). By including the indication information in the DCI, the base station eNB may be able to indicate, to the user apparatus UE, the number of reception antennas to be activated simultaneously, for example, on a subframe basis, which may increase flexibility of downlink scheduling.
In step S14, the user apparatus UE activates the number of reception antennas indicated by the indication information received in the process of step S13.

The base station eNB may repeat the process of step S12, and when the base station eNB determines that the number of reception antennas to be activated simultaneously in the user apparatus UE need to be changed, the base station eNB may transmit the antenna count indication signal to the user apparatus UE again. That is, the processes of steps S12 to S14 may be repeated as necessary.

In addition, when the base station eNB determines that the indication of the number of reception antennas to be activated simultaneously may no longer be required, the base station eNB may report, to the user apparatus UE, cancellation of the indication in the process of step S13.

Specifically, the base station eNB sets information indicating the cancellation of the indication of the number of reception antennas in the indication information in the process of step S13, and transmits the antenna count indication signal to the user apparatus UE. In the example of FIG. 4, the value of release in the indication information being "NULL" illustrates that the indication of the number of reception antennas is canceled. Note that that cancellation of the indication of the number of reception antennas may be indicated implicitly as no value is set in the indication information.

The user apparatus UE that has received the indication information setting information indicating cancellation of the indication of the number of reception antennas optionally determines the number of reception antennas to be activated simultaneously by itself thereafter. Accordingly, it may be possible to prevent the user apparatus UE from semi-permanently fixing the number of reception antennas to be activated simultaneously.

Note that even when the user apparatus UE has not received the reporting of cancellation of the indication of the number of reception antennas from the base station eNB, the user apparatus UE may voluntarily cancel the indication of the number of reception antennas at a predetermined trigger. Examples of the predetermined trigger may include a case where a predetermined period of time has elapsed, a case where a handover is performed, a case where the user apparatus UE itself is restarted, detached from the network, or reconnected to the network. When the user apparatus UE voluntarily cancels the indication of the number of reception antennas, the user apparatus UE may report to the base station eNB that the user apparatus UE has voluntarily cancelled the indication of the number of reception antennas.

As a result, it may be possible to prevent the user apparatus UE from semi-permanently fixing the number of reception antennas to be activated simultaneously, when the base station eNB fails to receive the reporting of cancellation of the indication of the number of reception antennas for some reasons. In addition, the base station eNB may be able to detect that the user apparatus UE has voluntarily cancelled the indication of the number of reception antennas.

Note that the radio communication system according to the present embodiment may control the number of transmission antennas to be simultaneously activated in the user apparatus UE by using the same processes as those described in steps S11 to S14. For example, the user apparatus UE may report, to the base station eNB, the number of transmission antennas supported by the user apparatus UE itself, using the same process as that of step S11. The base station eNB may indicate the number of transmission antennas to be activated simultaneously in the user apparatus UE using the same process as that of step S13. The user apparatus UE may simultaneously activate the number of transmission antennas indicated by the base station eNB, and transmit an uplink signal to the base station eNB. Next, an illustration is given of a process of FIG. 2B. In step S15, the base station eNB transmits a downlink signal. The user apparatus UE receives the downlink signal using the number of reception antennas that are in activation.

In step S16, the user apparatus UE performs channel estimation using a reference signal (Reference Signal) or the like included in the received downlink signal, and determines recommended values of RI (Rank Indicator) indicating the number of MIMO layers, PMI (Precoding Matrix Indicator), and of CQI (Channel Quality Indicator). In addition, the determined values of the RI, PMI, and CQI are fed back to the base station eNB as appropriate (transmits a channel state report). Note that when the number of reception antennas in activation is four, the user apparatus UE may select one of the MIMO layer numbers from Layer 1 to Layer 4 as a recommended value based on the downlink signal channel estimation; when the number of reception antennas in activation is two, the user apparatus UE may select layer 1 or layer 2 as a recommended value.

In step S17, the base station eNB determines the number of MIMO layers, the modulation scheme, the coding rate, and the like based on the recommended values of RI, PMI and CQI fed back from the user apparatus UE and the number of reception antennas indicated in step S13 to perform scheduling, and transmits a downlink signal. The user apparatus UE receives the downlink signal using the number of reception antennas indicated by the indication information received in the process of step S13.

Note that when it is preferable to prioritize the reception diversity gain over the peak throughput, the base station eNB may transmit the downlink signal with the number of layers less than the number of reception antennas in activation in the user apparatus UE. For example, in a case where the number of reception antennas in activation is four and the number of layers is two, the user apparatus UE compares this case with a case where the number of reception antennas in activation is two and the number of layers is two. As a result, the user apparatus UE may be able to obtain a larger reception diversity gain.

In addition, when it is preferable to prioritize the peak throughput over the reception diversity gain, the base station eNB may transmit the downlink signal with the same number of layers as the number of reception antennas in activation.

The processes performed by the radio communication system in the embodiment have been described above. According to the above-described processes, in a case where it is preferable to prioritize the peak throughput or the reception diversity gain over the battery consumption of the user apparatus UE, the base station eNB may be able to forcibly determine the number of reception antennas to be activated simultaneously by the user apparatus UE.

In addition, when the base station eNB itself has a small number of transmission antennas (e.g., one), the base station eNB indicates a reduced number of reception antennas to be activated by the user apparatus UE, which also achieves forcibly reducing the battery consumption of the user apparatus UE.

### FUNCTIONAL CONFIGURATION

The following illustrates examples of functional configurations of the user apparatus UE and the base station eNB that perform the operations of the above-described embodiment.

### USER APPARATUS

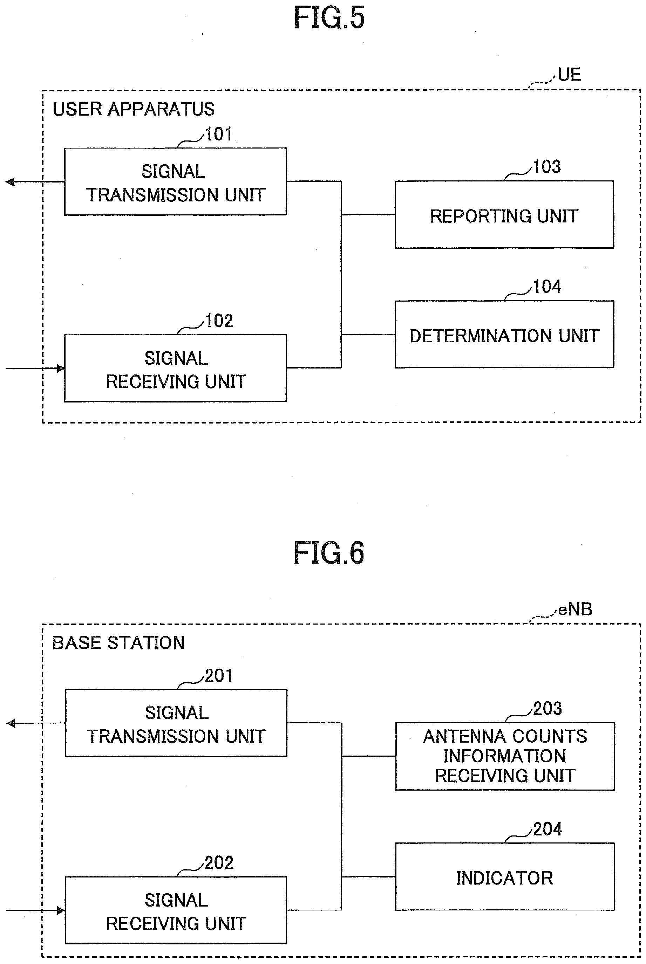

FIG. 5 is a diagram illustrating an example of a functional configuration of a user apparatus according to an embodiment. As illustrated in FIG. 5, the user apparatus UE includes a signal transmission unit 101, a signal receiving unit 102, a reporting unit 103, and a determination unit 104. Note that FIG. 5 merely illustrates the functional figuration particularly related to the embodiment of the present invention in the user apparatus UE, and the user apparatus UE may also include not-illustrated functions for performing at least operations in compliance with LTE. The functional figuration of the user apparatus UE illustrated in FIG. 5 is only an example. Any functional division and any names of the functional components may be applied insofar as the operations according to the present embodiment may be executed. The signal transmission unit 101 includes a function to generate various kinds of signals of the physical layer from the signals of higher layer to be transmitted from the user apparatus UE and wirelessly transmit the generated signals.

The signal receiving unit 102 includes a function to wirelesly receive various signals from the base station eNB and acquire signals of a higher layer from the received signals of the physical layer. The signal receiving unit 102 also includes a function to activate the number of reception antennas indicated by the determination unit 104 and wirelesly receive various signals from the base station eNB. The signal receiving unit 102 further includes a function to report, to the determination unit 104, the indication information received from the base station eNB. The reporting unit 103 includes a function to report the number of antennas to the base station eNB via the signal transmission unit 101.
When the determination unit 104 receives the indication information from the base station eNB, the determination unit 104 instructs the signal receiving unit 102 to activate the number of reception antennas indicated by the indication information.

In a case where the determination unit 104 has not received the indication information from the base station eNB (i.e., in the case where the number of reception antennas to be activated simultaneously is not indicated by the base station eNB, or in a case where the determination unit 104 has received the indication information from the base station eNB but the received indication information includes indication of cancelling the number of reception antennas, the determination unit 104 determines randomly determines the number of reception antennas to be activated in accordance with the status of the user apparatus UE itself (e.g., remaining battery charge).

Note that the signal receiving unit 102 may be implemented by a first receiving unit configured to receive indication information and a second receiving unit configured to receive a downlink signal from a base station. Further, the determination unit 104 may be included in the signal receiving unit 102 or the second receiving unit of the signal receiving unit 102.

### BASE STATION

FIG. 6 is a diagram illustrating an example of a functional configuration of a base station according to an embodiment. As illustrated in FIG. 6, the base station eNB includes a signal transmission unit 201, a signal receiving unit 202, an antenna count information receiving unit 203, and an indication unit 204. Note that FIG. 6 merely illustrates the functional figuration particularly related to the embodiment of the present invention in the base station eNB, and the base station eNB may also include not-illustrated functions for performing at least operations in compliance with LTE. The functional figuration of the base station eNB illustrated in FIG. 6 is only an example. Any functional division and any names of the functional components may be applied insofar as the operations according to the present embodiment may be executed.

The signal transmission unit 201 includes a function to generate various kinds of signals of the physical layer from the signals of higher layer to be transmitted from the base station eNB and wirelessly transmit the generated signals. The signal receiving unit 202 includes a function to wirelesly receive various signals from the user apparatus UE and acquire signals of a higher layer from the received signals of the physical layer.

The antenna count information receiving unit 203 includes a function to receive antenna count information from the user apparatus UE via the signal receiving unit 202. The antenna count information receiving unit 203 includes a function to report, to the indication unit 204, the received antenna count information.

The indication unit 204 includes a function to determine the number of reception antennas to be simultaneously activated in the user apparatus UE based on the number of antennas indicated in the antenna count information. Further, the indication unit 204 includes a function to transmit indication information having a setting of the determined number of reception antennas to the user apparatus UE via the signal transmission unit 201.

### HARDWARE CONFIGURATION

The block diagrams (FIGS. 5 and 6) used in the description of the above embodiment indicates blocks of functional units. These functional blocks (functional constituting components) are implemented by any combination of hardware and/or software components. The components for implementing respective functional blocks are not particularly specified. That is, the functional blocks may be implemented by one physically and/or logically combined device or may be implemented by two or more physically and/or logically separated devices that are directly and/or indirectly connected (e.g., wired and/or wireless connections).

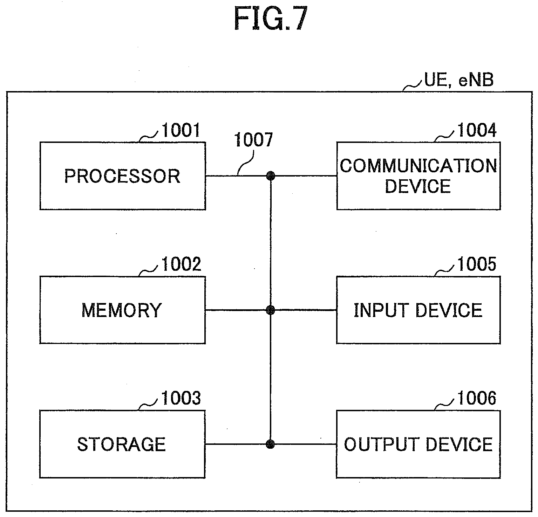

For example, the user apparatus UE and the base station eNB in an embodiment of the present invention may function as a computer that performs processes of a signal reception method or an indication method according to the present invention. FIG. 7 is a diagram illustrating an example of a hardware configuration of the base station and the user apparatus according to an embodiment. Each of the base station eNB and the user apparatus UE described above may be physically configured as a computer device including a processor 1001, a memory 1002, a storage 1003, a communication device 1004, an input device 1005, an output device 1006, and a bus 1007.

In the following description, the term "device" may be replaced with a circuit, an apparatus, a unit, or the like. The hardware configuration of the user apparatus UE or the base station eNB may be configured to include one or more of the respective devices illustrated in FIG. 7 or may be configured without including some of the devices.

The functions of the user apparatus UE or the base station eNB are implemented by allowing predetermined software (programs) to be loaded on the hardware such as the processor 1001, the memory 1002, and the like so as to cause the processor 1001 to perform calculations to control communications by the communication device 1004, and reading and/or writing of data in the storage 1003.

The processor 1001 may, for example, operate an operating system to control the entire computer. The processor 1001 may be configured to include a central processing unit (CPU) having an interface with peripherals, a control device, an operation device, and a register. For example, the signal transmission unit 101, the signal receiving unit 102, the reporting unit 103 and the determination unit 104 of the user apparatus UE; and the signal transmission unit 201, the signal receiving unit 202, the antenna count information receiving unit 203 and the indication unit 204 of the base station eNB may be implemented by the processor 1001.

In addition, the processor 1001 loads programs (program codes), software modules or data from the storage 1003 and/or the communication device 1004 into the memory 1002, and executes various processes according to the loaded programs, software modules or data. The programs are configured to cause a computer to execute at least a part of the operations described in the above embodiment. For example, the signal transmission unit 101, the signal receiving unit 102, the reporting unit 103 and the determination unit 104 of the user apparatus UE; and the signal transmission unit 201, the signal receiving unit 202, the antenna count information receiving unit 203 and the indication unit 204 of the base station eNB may be stored in the memory 1002 and implemented by a control program operating on the processor 1001. Other functional blocks may also be implemented in a similar manner. The above-described various processes described as being executed by one processor 1001; however, these processes may be executed simultaneously or sequentially by two or more processors 1001. The processor 1001 may be implemented by one or more chips. Note that the program may be transmitted from the network via an electric communication line.

The memory 1002 may be a computer-readable recording medium composed, for example, of a RAM (Random Access Memory) and at least one of a ROM (Read Only Memory), an EPROM (Erasable Programmable ROM), an EEPROM (Electrically Erasable Programmable ROM), and the like. The memory 1002 may be referred to as a register, a cache, a main memory (a main storage device), or the like. The memory 1002 may store executable programs (program codes), software modules, and the like for implementing a signal reception method or an indication method according to the embodiment of the present invention.

The storage 1003 is a computer-readable recording medium composed, for example, of at least one of an optical disk such as a CD-ROM (Compact Disk ROM), a hard disk drive, a flexible disk, a magneto-optical disk (e.g., a compact disk, a digital versatile disk, and a Blu-ray (registered trademark) disk), a smart card, a flash memory (e.g., a card, a stick, and a key drive), a floppy (registered trademark) disk, and a magnetic strip. The storage 1003 may be referred to as an auxiliary storage device. The above-described storage medium may be, for example, a database, a server, or another appropriate medium including the memory 1002 and/or the storage 1003.

The communication device 1004 is hardware (a transmitting-receiving device) for performing communications between computers via a wired and/or wireless network. The communication device 1004 may also be referred to as a network device, a network controller, a network card, a communication module, or the like. For example, the signal transmission unit 101 and the signal receiving unit 102 of the user apparatus UE, and the signal transmission unit 201 and the signal receiving unit 202 of the base station eNB may be implemented by the communication device 1004.

The input device 1005 is configured to receive an input from the outside. Examples of the input device include a keyboard, a mouse, a microphone, a switch, a button, and a sensor. The output device 1006 is configured to generate an output to the outside. Examples of the output device includes a display, a speaker, and an LED lamp. Note that the input device 1005 and the output device 1006 may be integrated (e.g., a touch panel).

In addition, the respective devices such as the processor 1001 and the memory 1002 may be connected by a bus 1007 for mutually communicating information with one another. The bus 1007 may be composed of a single bus or may be composed of different buses between the devices.

Further, the user apparatus UE or the base station eNB may include hardware such as a microprocessor, a digital signal processor (DSP), an ASIC (Application Specific Integrated Circuit), a PLD (Programmable Logic Device), and an FPGA (Field Programmable Gate Array). Or a part or all of the functional blocks of the user apparatus UE or the base station eNB may be implemented by these hardware components. For example, the processor 1001 may be implemented with at least one of these hardware components.

### OVERVIEW

According to the above-described embodiments, there is provided a user apparatus in a radio communication system including a base station and the user apparatus. The user apparatus includes
a reporting unit configured to report, to the base station, antenna count information indicating the number of reception antennas supported by the user apparatus;
a first receiving unit configured to receive, from the base station, indication information indicating the number of reception antennas to be activated in the user apparatus; and
a second receiving unit configured to receive, in a case where the first receiving unit has received the indication information, downlink signals from the base station by using the number of reception antennas indicated by the indication information.

This user apparatus UE may be able to provide a technique capable of indicating the number of antennas to be activated within the user apparatus.

In the user apparatus, in a case where the first receiving unit has received the indication information indicating that the indicated number of the reception antennas is to be canceled, the second receiving unit may optionally determine the number of reception antennas to be activated, and receive downlink signals by the determined number of the reception antennas. Accordingly, it may be possible to prevent the user apparatus UE from permanently fixing the number of reception antennas to be activated simultaneously.

According to the above-described embodiments, there is provided a base station in a radio communication system including the base station and a user apparatus. The base station includes
a receiving unit configured to receive antenna count information indicating the number of reception antennas supported by the user apparatus; and
a transmission unit configured to transmit indication information indicating, to the user apparatus, the number of reception antennas to be activated in the user apparatus based on the number of reception antennas included in the antenna count information.

This base station eNB may be able to provide a technique capable of indicating the number of antennas to be activated within the user apparatus.

According to the above-described embodiments, there is provided a signal reception method executed by a user apparatus in a radio communication system including a base station and the user apparatus. The signal reception method includes
reporting, to the base station, antenna count information indicating the number of reception antennas supported by the user apparatus;
receiving, from the base station, indication information indicating the number of reception antennas to be activated in the user apparatus; and
receiving, in a case where the indication information has been received, downlink signals from the base station by using the number of reception antennas indicated by the indication information.

This signal reception method may be able to provide a technique capable of indicating the number of antennas to be activated within the user apparatus.

According to the above-described embodiments, there is provided a signal indication method executed by a base station in a radio communication system including the base station and a user apparatus. The signal indication method includes
receiving antenna count information indicating the number of reception antennas supported by the user apparatus; and
transmitting indication information indicating, to the user apparatus, the number of reception antennas to be activated in the user apparatus based on the number of reception antennas included in the antenna count information.

This indication method may be able to provide a technique capable of indicating the number of antennas to be activated within the user apparatus.

### SUPPLEMENTARY DESCRIPTION OF EMBODIMENT

The apparatuses (user apparatus UE/base station eNB) according to an embodiment may include a CPU and a memory, may be realized by having a program executed by the CPU (processor), may be realized by hardware such as hardware circuitry in which the logic described in an embodiment is included, or may be realized by a mixture of a program and hardware.

The embodiments have been described as described above; however, the disclosed invention is not limited to these embodiments, and a person skilled in the art would understand various variations, modifications, replacements, or the like. Specific examples of numerical values have been used for encouraging understanding of the present invention; however, these numeric values are merely examples and, unless otherwise noted, any appropriate values may be used. In the above description, partitioning of items is not essential to the present invention. Matters described in more than two items may be combined if necessary. Matters described in one item may be applied to matters described in another item (as long as they do not conflict). In a functional block diagram, boundaries of functional units or processing units do not necessarily correspond to physical boundaries of parts. Operations of multiple functional units may be physically performed in a single part, or operations of a single functional unit may be physically performed by multiple parts. The order of steps in the above described sequences and flowcharts according to an embodiment may be changed as long as there is no contradiction. For the sake of convenience, the user apparatus UE and the base station eNB have been described by using functional block diagrams. These apparatuses may be implemented by hardware, by software, or by combination of both. The software which is executed by a processor included in a user apparatus UE according to an embodiment and the software which is executed by a processor included in a base station eNB may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

The present application is based on and claims the benefit of priority of Japanese Priority Application No. 2015-168341 filed on August 27, 2015, the entire contents of which are hereby incorporated by reference.

### DESCRIPTION OF REFERENCE SIGNS

- eNB: base station
- UE: user apparatus
- 101: signal transmission unit
- 102: signal receiving unit
- 103: reporting unit
- 104: determination unit
- 201: signal transmission unit
- 202: signal receiving unit
- 203: antenna count information receiving unit
- 204: indication unit
- 1001: processor
- 1002: memory
- 1003: storage
- 1004: communication device
- 1005: input device
- 1006: output device

## Claims

1. A user apparatus in a radio communication system including a base station and the user apparatus, the user apparatus comprising:
a reporting unit configured to report, to the base station, antenna count information indicating the number of reception antennas supported by the user apparatus;
a first receiving unit configured to receive, from the base station, indication information indicating the number of reception antennas to be activated in the user apparatus; and
a second receiving unit configured to receive, in a case where the first receiving unit has received the indication information, downlink signals from the base station by using the number of reception antennas indicated by the indication information.

2. The user apparatus according to claim 1, wherein in a case where the first receiving unit has received the indication information indicating that the indicated number of the reception antennas is to be canceled, the second receiving unit freely determines the number of reception antennas to be activated, and receives downlink signals by the determined number of the reception antennas.

3. A base station in a radio communication system including the base station and a user apparatus, the base station comprising:
a receiving unit configured to receive, from the user apparatus, antenna count information indicating the number of reception antennas supported by the user apparatus; and
a transmission unit configured to transmit, to the user apparatus, indication information indicating the number of reception antennas to be activated in the user apparatus based on the number of reception antennas included in the antenna count information.

4. A signal reception method executed by a user apparatus in a radio communication system including a base station and the user apparatus, the signal reception method comprising:
reporting, to the base station, antenna count information indicating the number of reception antennas supported by the user apparatus;
receiving, from the base station, indication information indicating the number of reception antennas to be activated in the user apparatus; and
receiving, in a case where the indication information has been received, downlink signals from the base station by using the number of reception antennas indicated by the indication information.

5. A signal indication method executed by a base station in a radio communication system including the base station and a user apparatus, the signal indication method comprising:
receiving, from the user apparatus, antenna count information indicating the number of reception antennas supported by the user apparatus; and
transmitting, to the user apparatus, indication information indicating the number of reception antennas to be activated in the user apparatus based on the number of reception antennas included in the antenna count information.
